Europäisches Patentamt

(19) European Patent Office

Office européen des brevets

(11) **EP 1 474 001 B1**

(12) **FASCICULE DE BREVET EUROPEEN**

(45) Date de publication et mention
de la délivrance du brevet:
**30.11.2005 Bulletin 2005/48**

(21) Numéro de dépôt: **03712256.1**

(22) Date de dépôt: **17.01.2003**

(51) Int Cl.$^7$: **A23C 9/12**, A23C 9/127

(86) Numéro de dépôt international:
**PCT/FR2003/000151**

(87) Numéro de publication internationale:
**WO 2003/070009 (28.08.2003 Gazette 2003/35)**

(54) **NOUVEAU PROCEDE DE FABRICATION DE PRODUITS LAITIERS FERMENTES**

NEUES HERSTELLUNGSVERFAHREN FÜR FERMENTIERTE MILCHPRODUKTE

NOVEL METHOD FOR THE PRODUCTION OF FERMENTED MILK PRODUCTS

(84) Etats contractants désignés:
**AT BE BG CH CY CZ DE DK EE ES FI FR GB GR HU IE IT LI LU MC NL PT SE SI SK TR**

(30) Priorité: **15.02.2002 FR 0201962**

(43) Date de publication de la demande:
**10.11.2004 Bulletin 2004/46**

(73) Titulaire: **COMPAGNIE GERVAIS DANONE**
**92300 Levallois Perret (FR)**

(72) Inventeurs:
• **QUEGUINER, Claire**
**F-92260 Fontenay aux Roses (FR)**
• **DE GREEF TRIAL, Nathalie**
**F-92340 Bourg la Reine (FR)**
• **GRUGIER, Fanny**
**F-22150 Gausson (FR)**
• **PAQUET, Denis**
**F-92140 Clamart (FR)**

(74) Mandataire: **Paris, Fabienne et al**
**Cabinet Plasseraud**
**65/67 rue de la Victoire**
**75440 Paris Cedex 09 (FR)**

(56) Documents cités:
EP-A- 1 197 152        DE-A- 2 217 950
US-A- 1 374 138        US-A- 3 947 598
US-A- 4 228 189        US-A- 4 576 822
US-A- 6 127 142

## Description

La présente demande de brevet est relative à un nouveau procédé de fabrication de produits laitiers fermentés, et aux nouveaux produits ainsi obtenus. Ce nouveau procédé est plus particulièrement adapté à la fabrication de yoghourts et de laits fermentés.

Il présente en effet l'avantage d'améliorer la texture de tels produits laitiers, et notamment d'en augmenter la viscosité, sans pour autant induire un phénomène de synérèse (exsudation de sérum) qui serait inacceptable pour un produit laitier fermenté de type yoghourt ou lait fermenté. Ce résultat remarquable est, conformément à la présente invention, obtenu en faisant subir une protéolyse à an moins une caséine du lait, à savoir au moins la caséine kappa, et en brassant le produit après la fermentation.

US 4576822 décrit un produit laitier fermenté, qui contient de la paracaséine précipitée.

Pour améliorer la texture de produits laitiers fermentés de type yoghourt ou lait fermenté, on procède actuellement par concentration du substrat laitier, ou bien par ajout de produits issus du lait, et notamment par ajout de protéines telles que caséinates, protéines de lactosérum, ou par ajout d'agents texturants (épaississants, gélifiants) tels que amidon, pectine, gélatine.

La protéolyse de caséine en général, et de caséine kappa en particulier, n'était pas, dans l'art antérieur, un phénomène souhaité lors de la fabrication de produits laitiers fermentés de type yoghourts et laits fermentés. En effet les enzymes caséinolytiques telles que, par exemple, celle qui est contenue dans la présure, et qui est utilisée pour la fabrication des fromages et fromages frais, étaient connues, du fait de leur effet coagulant, pour être inductrices d'importants phénomènes de synérèse. Or, si la formation de petit-lait et de sérum est recherchée et nécessaire à la fabrication de fromages et de fromages frais (récupération du caillé), elle n'est par contre pas souhaitable lors de la fabrication de yoghourts et laits fermentés, car elle conduit à une texture qui n'est pas acceptable pour ce type de produits laitiers (texture granuleuse, importante exsudation de sérum). C'est pourquoi, jusqu'alors, on n'utilisait pas d'enzymes caséinolytiques lors de la fabrication de yoghourts et laits fermentés, et on veillait même à éviter que de telles enzymes ne soient présentes ou produites dans le substrat laitier.

Le procédé selon l'invention propose au contraire de produire des produits laitiers fermentés de type yoghourts et laits fermentés dans lesquels au moins une caséine du lait, à savoir au moins la caséine kappa, est protéolysée de manière significative. La conduite d'une telle protéolyse lors de la fabrication de produits laitiers fermentés de type yoghourts et laits fermentés va à l'encontre des préjugés de l'homme du métier.

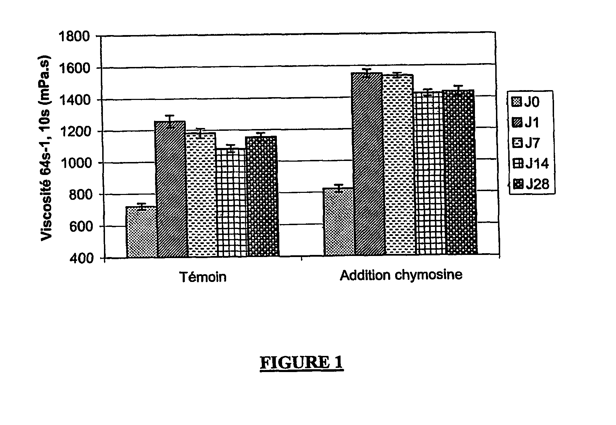

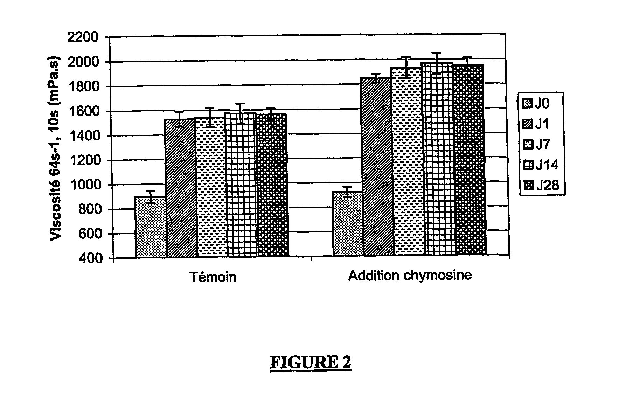

A titre illustratif, peut par exemple être cité l'article Schkoda *et al.* 2001 (« *Influence of the protein content on structural characteristics of stirred fermented milk* », Milchwissenschaft 56(1) :19-22), qui décrit des essais destinés à évaluer l'influence de la teneur en protéines du lait sur les caractéristiques de structure des différents produits issus de fermentations lactiques. Pour ce faire, des fermentations lactiques sont conduites sur du lait nanofiltré, de manière à faire varier la teneur en protéines de 3,5 à 7,0% dans un même lait. Afin de modéliser une production de yoghourts d'une part, et une production de fromages frais d'autre part, une partie des essais est menée en l'absence de présure (modélisation de la fabrication des yoghourts), et l'autre partie en présence de présure à faible dose (modélisation de la fabrication des fromages frais, avec 0,8ml de présure P99, 179 IMCU/ml, pour 100kg de lait ou de concentré de lait à pH 6,4, ce qui correspond en fait à une dose de 0,7 microgramme d'enzymes actives pour 100kg de lait). Le choix d'une telle modélisation illustre bien le fait que l'homme du métier n'envisageait *a priori* pas d'ajouter de la présure au cours de la fabrication de produits de type yoghourts. En outre, les résultats rapportés dans cet article mettent en évidence que si la présure permet, dans le modèle fromages frais (lait nanofiltré + présure), d'augmenter très légèrement la viscosité du produit lorsque le substrat est très concentré en protéines (concentration supérieure à 6% ; *cf*. Figure 2 de Schkoda *et al.* 2001), elle n'en conduit pas moins à une très forte diminution de la capacité à retenir le sérum (*cf*. Figure 1 de Schkoda *et al.* 2001). De tels résultats de synérèse, qui plus est associés au fait que, pour fabriquer des yoghourts et laits fermentés, on utilise justement des substrats laitiers dont la teneur en protéines est inférieure ou égale à 6%, renforcent alors la conviction de l'homme du métier selon laquelle il ne faut pas que les caséines soient protéolysées lors de la fabrication de produits laitiers fermentés de type yoghourts ou laits fermentés.

La protéolyse du lait était donc considérée dans l'art antérieur comme une source de problèmes technologiques et de défauts dans le lait et les produits laitiers, tels que la formation d'un caillé fragile accompagné de synérèse au cours de la fabrication de yoghourts (Tamine & Robinson 1985, « *Yoghurt - Science and Technology* », Ed. Woodhead Publishing Ltd 1999, *cf.* page 17), et une gélification du lait au cours du traitement thermique UHT (Stephaniak & Sorhaug 1995, Thermal denaturation of bacterial enzymes in milk. International dairy federation bulletin « *Heat induced changes in milk* », 1, p. 349-363).

En allant totalement à l'encontre des préjugés techniques de l'art antérieur, les inventeurs quant à eux proposent, pour fabriquer des produits laitiers fermentés de type yoghourts et laits fermentés, de protéolyser au moins une des caséines naturellement contenues dans le lait, à savoir au moins la caséine kappa, et de brasser le produit obtenu après fermentation. Les inventeurs démontrent en effet que ces moyens permettent, de façon surprenante et inattendue, d'améliorer la texture, et en particulier d'augmenter la viscosité de yoghourts et laits fermentés, sans pour autant induire une synérèse qui serait inacceptable pour de tels produits laitiers fermentés.

Dans la présente demande, il est donné aux termes « yoghourts » et « laits fermentés » leurs significations usuelles. Plus particulièrement, ces appellations correspondent à celles définies en France par le Décret n° 88-1203 du 30 décembre 1988 (publié au Journal Officiel de la République Française du 31 décembre 1988). Le texte de ce Décret est reproduit ci-dessous, en fin de partie descriptive, à la suite des exemples.

Afin d'obtenir un produit « yoghourt ou lait fermenté » tel que défini dans ledit Décret français, et comme, donc, visé dans la présente demande de brevet, il est notamment rappelé qu'il ne doit pas y avoir élimination de sérum et qu'il doit y avoir un traitement thermique au moins équivalent à la pasteurisation. Un traitement standard de pasteurisation est par exemple un traitement à 92-95°C pendant 5 à 10 min. Du fait de l'application d'un traitement thermique qui est au moins équivalent à la pasteurisation standard, les protéines sériques du substrat laitier sont globalement dénaturées (de 25 à 99% d'entre elles, environ).

La présente demande de brevet vise donc un nouveau procédé de fabrication de produits laitiers fermentés, et notamment de yoghourts et laits fermentés, caractérisé par le fait qu'il comprend les étapes suivantes :

- l'on soumet un substrat laitier dont la teneur en protéines est différente de zéro, mais inférieure ou égale à 6%, à une fermentation lactique et à une kappa caséinolyse de manière à atteindre en fin de fermentation lactique un taux de kappa caséinolyse égal ou supérieur à 20%, préférentiellement égal ou supérieur à 50%, plus préférentiellement égal ou supérieur à 70%, très préférentiellement égal ou supérieur à 80%, et par le fait que
- l'on brasse ledit substrat après fermentation lactique et traitement kappa caséinolytique.

Avantageusement, ladite kappa caséinolyse se déroule au moins partiellement de manière concomitante à ladite fermentation lactique. Comme présenté plus en détail ci-dessous, ladite enzyme kappa caséinolytique peut être ajoutée ou apportée après ledit traitement thermique (par exemple au début ou au cours de la fermentation lactique), ou bien avant ou au démarrage dudit traitement thermique, mais dans ce dernier cas, il faut alors veiller à ne pas induire de précipitation lors de ce traitement thermique.

Par « kappa caséinolyse » ou « traitement kappa caséinolytique », il est ici entendu protéolyse de la caséine kappa. De même, le terme « enzyme kappa caséinolytique » vise une enzyme capable de protéolyser la caséine kappa.

Comme le lait contient naturellement de la caséine kappa, et a naturellement une teneur en protéines différente de zéro, tout type de substrat laitier est *a priori* adapté à la mise en oeuvre de la présente invention. On choisira néanmoins bien entendu un substrat laitier qui, dans la mesure où il est destiné à la fabrication de yoghourts et laits fermentés, présente une teneur en protéines (avant fermentation) inférieure ou égale à 6%. Préférentiellement, on choisira un substrat laitier dont la teneur en protéines est comprise entre 3 et 5% bornes incluses, plus préférentiellement entre 3,4 et 5%, encore plus préférentiellement entre 3,6 et 4,8%. Une méthode conventionnelle pour mesurer la teneur en protéines d'un substrat laitier consiste à mesurer la teneur en azote total, et à retrancher la teneur en azote non protéique en mettant en oeuvre la méthode de Kjeldahl décrite dans « Science du lait - Principes des techniques laitières », quatrième édition, 1984, par C. Alais (Ed. SEPAIC), pages 195-196.

Le terme de substrat laitier est ici entendu dans sa signification usuelle pour la fabrication de produits laitiers fermentés de type yoghourts et laits fermentés, c'est-à-dire tout type de substrat dont la composition est adaptée à la mise en oeuvre d'une fermentation lactique en vue de la fabrication de yoghourts et laits fermentés adaptés à la consommation humaine. Généralement, le substrat laitier utilisé correspond en fait à du lait tel que collecté (par exemple du lait de vache, de brebis, de chèvre) qui, éventuellement, a été pré-pasteurisé et/ou écrémé. Le plus généralement, et notamment dans l'industrie, la composition du lait est en outre « standardisée » par ajout de produits dérivés du lait tels que poudre de lait écrémé, et/ou poudres de protéines laitières (caséinates ou WPC), et/ou matières grasses (crème, par exemple). Les substrats laitiers visés pour la présente invention ont donc en fait le plus généralement une composition qui correspond soit à celle du lait tel que collecté, soit à celle du lait standardisé, et ont pu être pré-pasteurisés (75°C pendant 20 à 30s) et/ou écrémés.

Le nouveau procédé conforme à l'invention peut être mené pour toute fermentation lactique. Les étapes d'un procédé de fermentation lactique peuvent être classiquement schématisées comme suit :

- après collecte, le lait est généralement pré-pasteurisé à 75°C pendant 10 à 30 secondes, écrémé et conservé jusqu'à utilisation par stockage réfrigéré,
- le lait écrémé est standardisé en protéines par des méthodes connues de l'homme du métier, notamment par addition de poudre de lait écrémé, de poudres de protéines laitières (caséinates ou WPC) et éventuellement en matière grasse (par exemple, de la crème), afin d'obtenir la composition souhaitée,
- après réhydratation des poudres sous agitation pendant 30 min à 1 heure, le mélange laitier ainsi obtenu est soumis à un traitement thermique de pasteurisation à une température de 92 à 95°C pendant 5 à 10 min puis à une homogénéisation sous pression dite en phase descendante ; alternativement, l'homogénéisation peut être effectuée avant le traitement thermique, elle est alors dite en phase montante,

- le mélange laitier est ensuite refroidi à une température supérieure de 1 ou 2 degrés à celle de la fermentation, et est ensemencé par un ferment lactique ; la fermentation est effectuée selon des procédures classiques, elle est arrêtée à un pH compris entre 4 et 5, de préférence entre 4,5 et 4,7.

Lorsque le mélange laitier est inoculé avec un ferment composé de souches de *Lactobacillus bulgaricus* et *de Streptococcus thermophilus,* le produit est un yoghourt. Lorsque le mélange laitier est, en outre des souches précédentes, ensemencé avec d'autres espèces de bactéries lactiques notamment *Bifidobacterium, Lactobacillus acidophilus, Lactobacillus casei* ou encore *Lactobacillus helveticus,* le produit fmi est un lait fermenté.

La kappa caséinolyse doit être menée de manière ménagée, c'est-à-dire que la réaction primaire de protéolyse ne doit pas consister à hydrolyser la caséine en ses différents acides aminés constitutifs, mais à hydrolyser la caséine en fragments de la taille du peptide, du polypeptide ou de la protéine. Ceci n'exclut bien sûr pas que ces fragments pourront, une fois produits par la kappa caséinolyse ménagée, être ensuite plus avant modifiés et/ou hydrolysés au cours du procédé. Initialement, toutefois, la kappa caséinolyse qui est menée conformément à la présente invention conduit à la libération d'au moins un fragment peptidique, polypeptidique ou protéique, et non à un ensemble d'acides aminés individuels. Pour ce faire, on utilisera, conformément à la présente invention, un agent kappa caséinolytique qui présente par ailleurs la propriété de coaguler le lait, c'est-à-dire la propriété de déstabiliser la micelle, et d'ainsi induire la coagulation du lait. Une méthode conventionnelle pour déterminer si un agent présente la propriété de coaguler le lait est le test de Berridge (Norme 176:1996 de la Fédération Internationale de Laiterie, 41, square Vergote, B-1040 Bruxelles), ou de Berridge modifié (sans ajout de $CaCl_2$ dans le lait testé).

A titre illustratif, de tels agents libèrent généralement, à partir de la caséine kappa, au moins un fragment C-terminal dont la taille est inférieure ou égale à 10 kDa, préférentiellement inférieure ou égale à 8 kDa.

Pour réaliser une kappa caséinolyse en milieu alimentaire, on utilise avantageusement une enzyme kappa caséinolytique. Pour mener une kappa caséinolyse ménagée, comme ci-dessus indiquée, on choisira préférentiellement une enzyme kappa caséinolytique qui présente la propriété de coaguler le lait.

De telles enzymes peuvent être d'origine variées, par exemple d'origine animale, microbienne, ou végétale.

L'enzyme majoritaire de la présure (présure de veau, de vache, de porc), à savoir la chymosine, a la propriété avantageuse d'hydrolyser la caséine kappa au niveau de la liaison phe-Met (résidus 105-106) pour libérer deux fragments polypeptidiques : un peptide C-terminal de type caséinonmacropeptide (CMP : 7,2 kDa) et une partie résiduelle N-terminale de type para caséine kappa (PCK : 11,8 kDa). La chymosine, et toute enzyme kappa caséinolytique qui, de manière comparable à la chymosine, hydrolyse la caséine kappa au niveau de la liaison Phe-Met (résidus 105-106) ou dans un environnement proche de cette liaison (par exemple, hydrolyse à l'intérieur de la région définie par les résidus 95 à 115), libérant ainsi un polypeptide de type CMP et un polypeptide de type PCK sont des exemples d'enzymes appropriées avantageuses pour la mise en oeuvre de l'invention. On peut trouver de la présure et de la chymosine auprès de nombreux fournisseurs, tels que par exemple Chr. Hansen, 2970 Horsholm, Danemark pour la présure, et DMS Food Specialites 2600 MA Delft, Pays-Bas pour la chymosine (commercialisée sous la marque Maxiren®).

Il existe des enzymes kappa caséinolytiques équivalentes à la chymosine, par exemple des enzymes d'origine fongique qui, elles aussi, hydrolysent la caséine kappa au niveau de la liaison Phe-Met (résidus 105-106) ou dans un environnement proche (région 95-115, par exemple). C'est notamment le cas de la protéase acide de *Rhizomucor miehei* plus connue sous la marque Fromase®, disponible auprès de DSM Foods Specialties (2600 MA Delft, Pays-Bas).

Un autre exemple d'enzyme caséinolytique appropriée avantageuse est une enzyme d'origine végétale, à savoir la cardosine extraite du cardon.

De préférence, on choisira donc une enzyme kappa caséinolytique coagulante qui hydrolyse la caséine kappa au niveau de la liaison Phe-Met (résidus 105-106), ou dans un environnement proche tel que la région définie par les résidus 95 à 115.

L'enzyme kappa caséinolytique peut être apportée sous forme purifiée, sous la forme d'un extrait biologique contenant une telle enzyme en mélange avec d'autres composés ou d'un extrait protéique de milieu de culture microbiologique, ou sous la forme d'un microorganisme producteur d'une telle enzyme. Par exemple, dans le cas de la chymosine, on peut apporter au substrat laitier cette enzyme sous forme purifiée, ou bien sous forme d'extrait biologique tel que de la présure (par exemple, caillette de veau), c'est-à-dire un mélange non purifié de chymosine et de petites quantités de pepsine. On peut également obtenir de la chymosine à partir de micro-organismes capables de produire l'enzyme du fait de transformations génétiques. Un exemple de microorganisme modifié par transfection du gène qui code la chymosine bovine est une levure *(Kluveromyces lactis),* qui produit la chymosine commercialisée par DSM Food Specialties (2600 MA Delft, Pays-Bas) sous la marque Maxiren®. *Aspergillus niger* a également été modifié par transfection du gène codant la chymosine ; la chymosine produite par ce microorganisme est commercialisée sous la marque Chy-Max® par Chr. Hansen.

Le choix de l'enzyme kappa caséinolytique et du moment de son ajout dans le substrat laitier dépendent bien entendu des conditions de température et de pH de ce substrat. On peut en effet choisir d'ajouter l'enzyme, ou d'en déclencher sa production, à tout moment du procédé de fabrication entre le moment de la collecte du lait et la fin de la fermentation lactique, par exemple après l'étape d'écrémage et de pré-pasteurisation qui est généralement pratiquée sur le lait collecté, lors de l'étape de réfrigération, lors de la standardisation du lait, ou bien encore après la pasteurisation, par exemple lors du refroidissement, de l'ensemencement des ferments lactiques, ou au cours de la fermentation lactique. Il faut donc choisir une enzyme qui est active au pH et à la température auxquels se trouve alors (et se trouvera) le substrat en question, ou bien choisir le moment d'addition d'une enzyme donnée en fonction des pH et températures auxquels cette enzyme est active. L'homme du métier choisira de préférence, pour un meilleur rendement, des pH et températures qui correspondent aux pH et températures d'activité optimale de l'enzyme. Lorsque les enzymes sont apportées sous la forme de microorganismes producteurs d'enzymes, il est bien entendu préférable d'ajouter ces microorganismes avant ou lors d'une étape pendant laquelle le lait est placé sous des conditions, et notamment des conditions de température et de pH favorables à leur métabolisme, et en particulier favorables à la production de protéases.

Dans le cas particulier de la chymosine, qui n'est pas thermorésistante, l'ajout d'enzyme ou de source d'enzyme, ou le cas échéant le déclenchement de sa production, se fait préférentiellement après l'étape de pasteurisation, par exemple en début ou au cours de la fermentation lactique. De manière avantageuse, la chymosine est ajoutée (ou le cas échéant, sa production est déclenchée) à la fin de la phase de latence de la fermentation lactique (le pH est alors compris entre pH 6,4 et 5,9, préférentiellement il est de 6,3 ; la température est quant à elle comprise entre 37°C et 43°C).

Si on utilise une enzyme thermorésistante (c'est-à-dire une enzyme qui ne serait que partiellement ou pas du tout inactivée par un traitement de type pasteurisation à 95°C pendant 5 à 10 min), alors l'ajout ou le déclenchement de production enzymatique peut se faire avant pasteurisation, par exemple pendant le stockage réfrigéré du lait collecté (qui a été éventuellement écrémé et/ou pré-pasteurisé), ou lors de la standardisation du lait.

La dose appropriée d'enzymes à ajouter ou, le cas échéant à faire produire, dépend quant à elle bien entendu de la teneur initiale en caséine kappa du substrat et de l'activité de l'enzyme au pH et à la température choisis.

Conformément à la présente invention, il est nécessaire d'obtenir un taux de kappa caséinolyse d'au moins 20%. Ce taux de 20% est un seuil minimum, mais des taux supérieurs (jusqu'à 100%) sont préférés. Il doit toutefois être noté que dans le cas où la kappa caséinolyse serait effectuée avant pasteurisation, alors il serait avantageux de se limiter à un taux de kappa caséinolyse inférieur ou égal à 70% avant pasteurisation, ceci afin d'éviter des phénomènes de précipitation lors de la pasteurisation.

L'homme du métier saura procéder aux ajustements nécessaires à chaque cas particulier considéré (pH, température, dose) pour atteindre le taux de caséinolyse souhaité. Par exemple, dans le cas de la chymosine ajoutée à la fin de la phase de latence de la fermentation lactique, c'est-à-dire à un moment où le pH n'est que très faiblement acide et où la température ne dépassera plus les 43°C, on pourra ajouter la chymosine à une dose de 1 à 7 microgrammes, préférentiellement de 2 à 7 microgrammes d'enzyme active pure par gramme de caséine kappa contenue dans le substrat laitier.

Pour mesurer le taux de kappa caséinolyse dans un substrat laitier, l'homme du métier dispose de techniques standards, telles que par exemple la méthode électrophorétique décrite par *Recio et al.* 1997 (« *Application of electrophoresis to the study of proteolysis of caseins* », J. Dairy Res. 64 :221-230). Le taux de kappa caséinolyse peut ainsi être évalué par mesure de la diminution de la surface du pic de caséine kappa observé après traitement enzymatique par rapport à la surface du pic de caséine kappa observé avant traitement enzymatique. Il est à relever qu'à la fin du procédé selon l'invention, on ne retrouve généralement pas tous les fragments de caséine kappa qui ont été produits par kappa caséinolyse ; il est probable que ces fragments sont en partie utilisés comme nutriments par les ferments lactiques en croissance. C'est pourquoi il est recommandé de suivre la diminution du pic de caséine kappa, plutôt que l'apparition de fragments de kappa caséinolyse (tels que apparition du CMP dans le cas où l'enzyme utilisée coupe la caséine kappa au niveau de la liaison Phe-Met - résidus 105-106 -).

En sus de la kappa caséinolyse, le procédé selon l'invention comprend le brassage du produit fermenté. Ce brassage peut se faire selon les techniques classiques, telles que le lissage par passage au travers d'un filtre (« *Yoghurt science and Technology*», par A.Y. Tamine et R.K. Robinson, Ed. Woodhead Publishing Ltd. 1999).

Le procédé selon l'invention présente l'avantage de permettre la fabrication de produits laitier fermentés de type yoghourts et laits fermentés dont la texture est améliorée par rapport à des yoghourts et laits fermentés fabriqués de manière comparable, mais sans kappa caséinolyse à au moins 20% et/ou sans brassage. Il permet notamment de fabriquer des yoghourts et laits fermentés dont la viscosité apparente (telle que mesurée à 64s$^{-1}$, 10s et à 10°C sur un viscosimètre à cylindres co-axiaux) est augmentée de 20% à 70% par rapport aux yoghourts et laits fermentés témoins. Ce procédé permet donc de limiter, voire d'éviter, l'ajout d'agents texturants (tels que gélatine, amidon, pectine) qui est actuellement pratiqué pour conférer la texture appropriée aux produits de type laits fermentés et yoghourts. Il permet aussi de limiter la teneur protéique du substrat laitier utilisé : le substrat laitier peut être moins concentré en protéines tout en conservant un résultat de viscosité apparente correct. Par exemple, les inventeurs ont pu mettre en évidence que, pour atteindre la valeur de viscosité apparente qui est obtenue en appliquant le procédé selon l'invention à un mélange laitier à 4,1% de protéines, il faudrait, en l'absence de traitement kappa caséinolytique, monter la teneur protéique du substrat laitier à 4,9%. Avec le procédé selon l'invention, la fabrication de produits laitiers de type yoghourts et laits fermentés nécessite moins d'agents texturants et de protéines pour un résultat équivalent en terme de texture.

De manière particulièrement remarquable, le procédé selon l'invention ne conduit pas à des phénomènes de synérèse qui seraient inacceptables pour un produit de type lait fermenté ou yoghourt. Ainsi, les inventeurs ont pu constater l'absence de tout phénomène de décantation ou d'exsudation, et ce même après 28 jours de stockage à 10°C. Les produits obtenus présentent et conservent également une texture parfaitement lisse et homogène.

La présente demande vise également les laits fermentés et yoghourts susceptibles d'être obtenus par le procédé selon l'invention. Les laits fermentés et yoghourts obtenus par le procédé selon la présente invention sont notamment caractérisés par une teneur en kappa caséine sensiblement inférieure à la teneur en kappa caséine normalement observée dans les produits comparables de l'art antérieur. Lorsqu'ils sont issus de lait ou substrat laitier qui a subi un traitement thermique au moins équivalent à la pasteurisation standard (par exemple, 5-10min à 92-95°C), les protéines sériques du produit fini sont globalement dénaturées (de 25 à 99 % de protéines sériques dénaturées, environ). Plus particulièrement, les yoghourts et laits fermentés selon l'invention sont caractérisés par un taux de kappa caséinolyse d'au moins 20%, préférentiellement d'au moins 50%, plus préférentiellement d'au moins 70%, très préférentiellement d'au moins 80%. Ce taux de kappa caséinolyse peut être évalué par électrophorèse capillaire selon la méthode de *Recio et al.* 1997 (« *Application of electrophoresis to the study of proteolysis of caseins* », J. Dairy Res. 64 :221-230), en utilisant le fait que la surface du pic de caséine kappa diminue au cours de la fabrication des yoghourts et laits fermentés préparés selon le procédé de l'invention, et en se référant à un pic étalon, tel que le pic d'un composé de référence dont la teneur ne varie pas de manière significative au cours du procédé. Si l'enzyme kappa caséinolytique utilisée est la chymosine, le pic de caséine alpha S1 peut servir de pic étalon. Le calcul suivant permet donc d'évaluer le taux de kappa caséinolyse d'un lait fermenté préparé selon le procédé de l'invention :

$$\text{taux (\%) de kappa caséinolyse} = (1 - ((a_{\kappa e} * a_{\alpha st} / a_{\alpha se})/a_{\kappa t})) * 100$$

avec :

$a_{\kappa e}$ = aire du pic de caséine kappa de l'échantillon de yoghourt
$a_{\kappa t}$ = aire du pic de caséine kappa d'un lait témoin
$a_{\alpha se}$ = aire du pic du composé de référence de l'échantillon de yoghourt (pic de caséine alpha S1 dans le cas de la chymosine)
$a_{\alpha st}$ = aire du pic du composé de référence d'un lait témoin (pic de caséine alpha S1)

On entend par lait témoin, un lait de grand mélange qui a été écrémé et pré-pasteurisé (75°C -10 à 30s).

Alternativement, si l'on détecte dans un yoghourt ou un lait fermenté la présence significative d'une enzyme kappa caséinolytique, telle que par exemple la présence significative de chymosine, on peut en déduire que ce yoghourt ou lait fermenté est conforme à la présente invention. Par exemple, la présence significative de chymosine peut être déterminée à l'aide d'anticorps anti-chymosine (Boudjellab N., Rolet-Repecaud O. et Collin J.C., 1994, *« Detection of residual chymosin in cheese by enzyme-linked immunosorbent assay »,* J. Dairy Research 61 : 101-109).

L'homme du métier trouvera dans l'ouvrage « *Yoghurt - Science and Technology* », 2ème édition, par A.Y. Tamine et R.K. Robinson (Woodhead Publishing Ltd), dont le contenu est incorporé à la présente demande par référence, une source d'indications techniques intéressantes pour la mise en oeuvre de modes de réalisation de l'invention.

Les exemples qui suivent sont donnés à titre purement illustratif, et font référence aux figures 1 et 2, qui présentent chacune les valeurs de viscosité apparente ($64s^{-1}$, 10s, viscosimètre à cylindres coaxiaux) mesurées en mPa.s sur les laits fermentés témoins (cinq barres de gauche) et sur les laits fermentés obtenus par traitement chymosinique conforme à l'invention (cinq barres de droite) : pour chacun des deux groupes de laits fermentés, sont présentées de gauche à droite les mesures de viscosité apparente faites à J0 (mesure de viscosité apparente faite à 20°C), puis à J1, J7, J14 et J28 (mesure de viscosité apparente faite à 10°C).

**Exemple 1** :

Du lait de grand mélange issu de la collecte directe chez les producteurs, préalablement écrémé, pré-pasteurisé et refroidi à 4°C, est standardisé en protéines (4,3%) et en matière grasse (3,2%) à l'aide de poudre de lait écrémé et de crème. Le substrat laitier ainsi préparé est soumis à une pasteurisation (95°C-8min), puis à une homogénéisation. Après refroidissement à 44°C puis ensemencement avec un ferment lactique (souches pures de *Streptococcus thermophilus* et de *Lactobacillus bulgaricus,* obtenues auprès de Chr. Hansen, température de fermentation 43°C, temps de fermentation = 4h30), le substrat laitier est additionné d'une dose de chymosine Maxiren® à 120 IMCU/ g commercialisée par DSM (1 μg de chymosine pour 100 g de mélange laitier, soit 2,3 μg d'enzyme/ g de caséine kappa).

Lorsque le pH 4,6 est atteint, le caillé est soutiré de la cuve de fermentation pour subir un lissage par passage au travers d'un filtre, et le produit brassé est soumis à un refroidissement jusqu'à 20°C, dans un échangeur à plaques, puis conditionné en pots de 125 ml, stocké à 4°C pendant une nuit, puis à 10°C pendant 28 jours.

Les résultats de viscosité apparente (64s$^{-1}$, après 10s, viscosimètre à cylindres coaxiaux) mesurée au cours du stockage réfrigéré d'un lait fermenté de type yoghourt, additionné ou non de chymosine en début de fermentation sont présentés sur la Figure 1. Les barres d'erreur représentent les intervalles de confiance à 95%.

Outre une augmentation importante de sa viscosité par rapport au témoin, le produit préparé en présence de chymosine ne présente aucun phénomène d'exsudation et ce, même après 28 jours de stockage à 10°C. Sa texture en bouche est décrite par les dégustateurs comme étant particulièrement onctueuse et tapissante. Aucun défaut de goût n'a été détecté. La présence de chymosine pendant la fermentation ne modifie absolument pas la cinétique d'acidification.

## Exemple 2 :

Du lait de grand mélange préalablement écrémé et pré-pasteurisé et refroidi à 4°C, est standardisé en protéines (4,5%) et en matière grasse (2,1%) à l'aide de poudre de lait écrémé et de crème. Le substrat laitier ainsi préparé est soumis à une pasteurisation (95°C - 8min), puis à une homogénéisation. Après refroidissement à 39°C, le substrat laitier est ensemencé avec un ferment lactique (souches pures de *Streptococcus thermophilus* et de *Lactobacillus bulgaricus* obtenues auprès de Chr. Hansen, température de fermentation = 38°C, temps de fermentation = 7h30). La chymosine (Maxiren® à 120 IMCU/g de chez DSM) est ajoutée en cours de fermentation (pH 6,2) à raison 1,5 μg de chymosine pour 100 g de mélange laitier soit 3,3 μg d'enzyme/ g de caséine kappa.

Lorsque le pH 4,6 est atteint, le caillé est soutiré de la cuve de fermentation pour subir un lissage par passage au travers d'un filtre, et le produit brassé est soumis à un refroidissement jusqu'à 20°C, dans un échangeur à plaques, puis conditionné en pots de 125 ml, stocké à 4°C pendant une nuit, puis à 10°C pendant 28 jours.

Les résultats de viscosité apparente (64s$^{-1}$, après 10s, viscosimètre à cylindres coaxiaux) mesurée au cours du stockage réfrigéré d'un lait fermenté de type yoghourt, additionné ou non de chymosine en cours de fermentation (pH = 6,2) sont présentés sur la Figure 2. Les barres d'erreur représentent les intervalles de confiance à 95%.

De la même façon que sur l'exemple précédent, le produit préparé en présence de chymosine ne présente aucun phénomène d'exsudation et ce, même après 28 jours de stockage à 10°C. Sa texture en bouche est décrite par les dégustateurs comme étant particulièrement onctueuse et tapissante par rapport au témoin. Aucun défaut de goût n'a été détecté. La présence de chymosine pendant la fermentation ne modifie pas la cinétique d'acidification.

Décret n° 88-1203 du 30 décembre 1988 Décret relatif aux laits fermentés et au yaourt ou yoghourt NOR: ECOC8800150D

Le Premier ministre,

Sur le rapport du ministre d'Etat, ministre de l'économie, des finances et du budget, du garde des sceaux, ministre de la justice, du ministre de l'agriculture et de la forêt et du ministre de la solidarité, de la santé et de la protection sociale, porte-parole du Gouvernement,

Vu la loi du 1er août 1905 sur les fraudes et falsifications en matière de produits ou de services, et notamment son article 11, ensemble le décret du 22 janvier 1919 modifié pris pour l'application de ladite loi ;

Vu la loi du 29 juin 1934 relative à la protection des produits laitiers ;

Vu la loi du 2 juillet 1935 tendant à l'organisation et à l'assainissement du marché du lait ;

Vu le décret du 15 avril 1912 modifié portant application de la loi du 1er août 1905 susvisée en ce qui concerne les denrées alimentaires ;

Vu le décret du 25 mars 1924 modifié portant application de la loi du 1 er août 1905 en ce qui concerne le lait et les produits de la laiterie ;

Vu le décret n° 84-1147 du 7 décembre 1984 portant application de la loi du 1er août 1905 susvisée en ce qui concerne l'étiquetage et la présentation des denrées alimentaires ;

Le Conseil d'Etat (section des finances) entendu,

## Article 1

La dénomination "lait fermenté" est réservée au produit laitier préparé avec des laits écrémés ou non ou des laits concentrés ou en poudre écrémés ou non, enrichis ou non de constituants du lait, ayant subi un traitement thermique au moins équivalent à la pasteurisation, ensemencés avec des microorganismes appartenant à l'espèce ou aux espèces caractéristiques de chaque produit.

La coagulation des laits fermentés ne doit pas être obtenue par d'autres moyens que ceux qui résultent de l'activité des microorganismes utilisés.

La quantité d'acide lactique libre qu'ils contiennent ne doit pas être inférieure à 0,6 gramme pour 100 grammes lors de la vente au consommateur et la teneur en matière protéique rapportée à la partie lactée ne doit pas être inférieure à celle d'un lait normal.

Les laits fermentés doivent être maintenus jusqu'à la vente au consommateur à une température susceptible d'éviter leur altération et qui sera fixée par arrêté conjoint des ministres chargés de l'agriculture, de la santé et de la consommation.

Article 2

La dénomination "yaourt" ou "yoghourt" est réservée au lait fermenté obtenu, selon les usages loyaux et constants, par le développement des seules bactéries lactiques thermophiles spécifiques dites Lactobacillus bulgaricus et Streptococcus thermophilus, qui doivent être ensemencées simultanément et se trouver vivantes dans le produit fini, à raison d'au moins 10 millions de bactéries par gramme rapportées à la partie lactée.

La quantité d'acide lactique libre contenue dans le yaourt ou yoghourt ne doit pas être inférieure à 0,7 gramme pour 100 grammes lors de la

vente au consommateur.

Article 3

Les laits fermentés peuvent être additionnés des produits suivants : extraits d'aromates, arômes naturels ainsi que, dans la limite de 30 p. 100 en poids du produit fini, sucres et autres denrées alimentaires conférant une saveur spécifique.

L'incorporation en tant que produits de substitution de matières grasses et protéiques d'origine non laitière est interdite. Ils ne doivent subir aucun traitement permettant de soustraire un élément constitutif du lait mis en oeuvre, notamment l'égouttage du coagulum.

Des arrêtés pris dans les formes prévues à l'article 1er du décret du 15 avril 1912 susvisé fixent la liste et les conditions d'emploi des autres substances et des autres catégories d'arômes autorisées pour la fabrication et la préparation des produits définis au présent décret.

Article 4

*Modifié par Décret 97-2981997-03-27 art. 2 JORF 3 avril 1997.*

L'étiquetage des laits fermentés comporte, outre les mentions prévues par les articles R. 112-6 à R. 112-31 du code de la consommation susvisé :

- en complément de la dénomination de vente, l'indication de l'espèce animale ou des espèces animales dont le lait provient, dès lors qu'il ne s'agit pas de lait de vache ;
- la mention "conservation à..." suivie de l'indication de la température à respecter ;
- la mention "maigre" faisant suite à la dénomination de vente si la teneur en matière grasse du produit, calculée sur la partie lactée, est inférieure à 1 p. 100 en poids ;
- suivant le cas, la mention "sucré" ou le nom de la matière aromatique utilisée si le lait fermenté est sucré ou aromatisé ;
- en cas d'adjonction d'un ou plusieurs des ingrédients prévus à l'article 3, la mention de cet ou de ces ingrédients doit être jointe à la dénomination de vente;

L'étiquetage des laits fermentés peut comporter la mention "gras", accompagnant la dénomination de vente, si la teneur en matière grasse, calculée sur la partie lactée, est au moins égale à 3 p. 100 en poids.

Article 5

La mention "yaourt" ou "yoghourt" ne peut figurer dans l'étiquetage d'une denrée alimentaire que si le produit concerné renferme du "yaourt" ou "yoghourt" conforme à la définition prévue à l'article 2 ci-dessus.

Article 6

Un arrêté conjoint des ministres chargés de l'agriculture, de la santé et de la consommation fixe, le cas échéant, la durée pendant laquelle les produits définis au présent décret conservent leurs propriétés spécifiques.

Article 7

*Modifié par Décret 97-298 1997-03-27 art. 2 JORF 3 avril 1997.*

Indépendamment des mesures prévues pour la recherche et la constatation éventuelle des délits de fraude en application des articles R. 215-1 à R. 215-15 du code de la consommation, les caractéristiques microbiologiques des laits fermentés et les modalités de contrôle de ces caractéristiques sont fixées par arrêté conjoint des ministres chargés de l'agriculture, de la santé et de la consommation.

Article 8

[*article(s) modificateur(s)*]

Article 9

Le ministre d'Etat, ministre de l'économie, des finances et du budget, le garde des sceaux, ministre de la justice, le ministre de l'agriculture et de la forêt, le ministre de la solidarité, de la santé et de la protection sociale, porte parole du Gouvernement, et le secrétaire d'Etat auprès du ministre d'Etat, ministre de l'économie, des finances et du budget, chargé de la consommation, sont chargés, chacun en ce qui le concerne, de l'exécution du présent décret, qui sera publié au Journal officiel de la République française.


**Revendications**

**1.** Procédé de fabrication d'un produit laitier choisi parmi le groupe constitué par les laits fermentés et les yoghourts, **caractérisé par le fait que** :

- l'on soumet un substrat laitier dont la teneur en protéines est différente de zéro mais inférieure ou égale à 6%, à un traitement thermique au moins équivalent à la pasteurisation, à une fermentation lactique et à une kappa caséinolyse à l'aide d'une enzyme choisie parmi le groupe des enzymes kappa caséinolytiques qui présentent la propriété de coaguler le lait, de manière à atteindre en fin de fermentation lactique un taux de kappa caséinolyse égal ou supérieur à 20%, ladite kappa caséinolyse étant déclenchée entre la collecte du lait et la fin de la fermentation lactique, sous réserve que si elle est déclenchée avant ledit traitement thermique, on veille alors à ne pas induire de précipitation lors de ce traitement thermique, et **par le fait que** :

- l'on brasse ledit substrat après fermentation lactique et traitement kappa caséinolytique.

**2.** Procédé selon la revendication 1, **caractérisé en ce que** la teneur en protéines du substrat laitier se situe entre 3 et 5 %, bornes incluses.

**3.** Procédé selon la revendication 1 ou 2, **caractérisé en ce que** le taux de kappa caséinolyse est égal ou supérieur à 50%.

**4.** Procédé selon l'une quelconque des revendications 1 à 3, **caractérisé en ce que** le taux de kappa caséinolyse est égal ou supérieur à 70%, préférentiellement égal ou supérieur à 80%.

**5.** Procédé selon l'une quelconque des revendications 1 à 4, **caractérisé en ce que** ladite enzyme kappa caséinolyse coagulante est apportée sous forme purifiée, ou sous forme d'un extrait biologique ou d'un extrait protéique de milieu de culture microbiologique, ou sous la forme d'un microorganisme producteur d'une telle enzyme.

**6.** Procédé selon l'une quelconque des revendications 1 à 5, **caractérisé en ce que** ladite enzyme kappa caséinolyse coagulante protéolyse la kappa caséine au niveau de la liaison Phe-Met (résidus 105-106).

**7.** Procédé selon l'une quelconque des revendications 1 à 6, **caractérisé en ce que** ladite enzyme kappa caséinolyse coagulante est la chymosine.

**8.** Procédé selon la revendication 7, **caractérisé en ce que** la chymosine est apportée au substrat laitier sous forme de présure.

**9.** Procédé selon l'une quelconque des revendications 1 à 6, **caractérisé en ce que** ladite enzyme kappa caséinolyse coagulante est la protéase acide de *Rhizomucor miehei.*

**10.** Procédé selon la revendication 8 ou 9, **caractérisé en ce que** la chymosine est apportée à la fin de la phase de latence de la fermentation lactique.

**11.** Utilisation d'une enzyme choisie parmi le groupe des enzymes kappa caséinolytiques qui présentent la propriété de coaguler le lait, pour la fabrication, par traitement thermique au moins équivalent à la pasteurisation, par fermentation lactique et par kappa caséinolyse, d'un produit laitier brassé choisi parmi le groupe constitué par les laits fermentés et les yoghourts, ladite kappa caséinolyse étant déclenchée entre la collecte du lait et la fin de la fermentation lactique, sous réserve que si elle est déclenchée avant ledit traitement thermique, on veille alors à ne pas induire de précipitation lors de ce traitement thermique.

**12.** Produit laitier brassé choisi parmi le groupe constitué par les laits fermentés et les yoghourts susceptibles d'être obtenus à partir d'un lait pasteurisé à une température comprise entre 92 et 95°C pendant 5 à 10 min, **caractérisé en ce que** son taux de kappa caséinolyse est supérieur ou égal à 20% par rapport à du lait de grand mélange écrémé et pré-pasteurisé.

**13.** Produit laitier brassé choisi parmi le groupe constitué par les laits fermentés et les yoghourts, susceptible d'être obtenu par le procédé selon l'une quelconque des revendications 1 à 10.

**Patentansprüche**

**1.** Verfahren zur Herstellung eines Molkereierzeugnisses, ausgewählt aus der Gruppe bestehend aus fermentierter Milch und Joghurt, **dadurch gekennzeichnet, dass**:

- ein Milchsubstrat, dessen Proteingehalt von 0 verschieden aber kleiner oder gleich 6% ist, einer der Pasteurisierung zumindest äquivalenten Wärmebehandlung, einer Milchsäuregärung und einer Kappa-Kaseinolyse mit Hilfe eines Enzyms unterzogen wird, das aus der Gruppe der Kappa-Kaseinolyseenzyme ausgewählt ist, die die Eigenschaft haben, die Milch dick zu legen, um am Ende der Milchsäuregärung eine Kappa-Kaseinolyserate von 20% oder mehr zu erhalten, wobei die Kappa-Kaseinolyse zwischen dem Sammeln der Milch und dem Ende der Milchsäuregärung ausgelöst wird, unter dem Vorbehalt, dass, wenn sie vor der Wärmebehandlung ausgelöst wird, darauf geachtet wird, bei dieser Wärmebehandlung keine Ausfällung herbeizuführen, und dass:
- das Substrat nach Milchsäuregärung und Kappa-Kaseinolysebehandlung gerührt wird.

**2.** Verfahren nach Anspruch 1, **dadurch gekennzeichnet, dass** der Eiweißgehalt des Milchsubstrats zwischen 3 und 5%, Grenzwerte einschließlich, liegt.

**3.** Verfahren nach Anspruch 1 oder 2, **dadurch gekennzeichnet, dass** die Kappa-Kaseinolyserate größer oder gleich 50% ist.

**4.** Verfahren nach einem beliebigen der Ansprüche 1 bis 3, **dadurch gekennzeichnet, dass** die Kappa-Kaseinolyserate größer oder gleich 70%, vorzugsweise größer oder gleich 80% ist.

**5.** Verfahren nach einem beliebigen der Ansprüche 1 bis 4, **dadurch gekennzeichnet, dass** das dicklegende Kappa-Kaseinolyseenzym in gereinigter Form oder in Form eines biologischen Extrakts oder eines Eiweißextrakts eines mikrobiologischen Kulturmilieus oder in Form eines ein solches Enzym erzeugenden Mikroorganismus zugesetzt wird.

**6.** Verfahren nach einem beliebigen der Ansprüche 1 bis 5, **dadurch gekennzeichnet, dass** das dicklegende Kappa-Kaseinolyseenzym das Kappa-Kasein in Höhe der Phe-Met-Bindung (Reste 105 bis 106) proteolysiert.

7. Verfahren nach einem beliebigen der Ansprüche 1 bis 6, **dadurch gekennzeichnet, dass** das dicklegende Kappa-Kaseinolyseenzym Chymosin ist.

8. Verfahren nach Anspruch 7, **dadurch gekennzeichnet, dass** das Chymosin dem Milchsubstrat in Form von Lab zugesetzt wird.

9. Verfahren nach einem beliebigen der Ansprüche 1 bis 6, **dadurch gekennzeichnet, dass** das dicklegende Kappa-Kaseinolyseenzym die saure Protease von Rhizomucor miehei ist.

10. Verfahren nach Anspruch 8 oder 9, **dadurch gekennzeichnet, dass** das Chymosin am Ende der Latenzphase der Milchsäuregärung zugesetzt wird.

11. Verwendung eines Enzyms, ausgewählt unter der Gruppe der Kappa-Kaseinolyseenzyme, die die Eigenschaft haben, die Milch dick zu legen, für die Herstellung, durch eine der Pasteurisierung wenigstens gleichwertige Wärmebehandlung, durch Milchsäuregärung und durch Kappa-Kaseinolyse, eines gerührten Milchproduktes, ausgewählt aus der Gruppe bestehend aus fermentierter Milch und Joghurt, wobei die Kappa-Kaseinolyse zwischen dem Sammeln der Milch und dem Ende der Milchsäuregärung ausgelöst wird, wobei, wenn sie vor der Wärmebehandlung ausgelöst wird, darauf geachtet wird, bei der Wärmebehandlung keine Ausfällung herbeizuführen.

12. Gerührtes Milchprodukt, ausgewählt aus der durch aus bei einer Temperatur zwischen 92 und 95°C 5 bis 10 Minuten lang pasteurisierter Milch erhältlichen fermentierten Milch und Joghurt gebildeten Gruppe, **dadurch gekennzeichnet, dass** seine Kappa-Kaseinolyserate größer oder gleich 20% im Vergleich zu entrahmter und vorpasteurisierter Mischmilch ist.

13. Gerührtes Milchprodukt, ausgewählt aus der Gruppe bestehend aus fermentierter Milch und Joghurt, das nach einem Verfahren nach einem der Ansprüche 1 bis 10 erhältlich ist.

**Claims**

1. A method for the manufacture of a dairy product chosen from the group consisting of fermented milks and yogurts, **characterized in that**:

    - a dairy substrate whose protein content is different from zero but less than or equal to 6% is subjected to a heat treatment at least equivalent to pasteurization, to a lactic acid fermentation and to a kappa caseinolysis with the aid of an enzyme chosen from the group of kappa-caseinolytic enzymes which have the property of coagulating milk, so as to obtain at the end of lactic acid fermentation a kappa caseinolysis level equal to or greater than 20%, said kappa caseinolysis being initiated between the collection of the milk and the end of the lactic acid fermentation, provided that if it is initiated before said heat treatment, care will then be taken not to induce precipitation during this heat treatment, and **in that**:

    - said substrate is stirred after lactic acid fermentation and kappa-caseinolytic treatment.

2. The method as claimed in claim 1, **characterized in that** the protein content of the dairy substrate is between 3 and 5% inclusive.

3. The method as claimed in claim 1 or 2, **characterized in that** the kappa caseinolysis level is equal to or greater than 50%.

4. The method as claimed in any one of claims 1 to 3, **characterized in that** the kappa caseinolysis level is equal to or greater than 70%, preferably equal to or greater than 80%.

5. The method as claimed in any one of claims 1 to 4, **characterized in that** said coagulating kappa caseinolysis enzyme is provided in purified form, or in the form of a biological extract or a protein extract of a microbiological culture medium, or in the form of a microorganism producing such an enzyme.

**6.** The method as claimed in any one of claim 1 to 5, **characterized in that** said coagulating kappa caseinolysis enzyme proteolyzes the kappa-casein at the Phe-Met bond (residues 105-106)

**7.** The method as claimed in any one of claims 1 to 6, **characterized in that** said coagulating kappa caseinolysis enzyme is chymosin.

**8.** The method as claimed in claim 7, **characterized in that** the chymosin is brought to the dairy substrate in the form of rennet.

**9.** The method as claimed in any one of claims 1 to 6, **characterized in that** said coagulating kappa caseinolysis enzyme is the *Rhizomucor miehei* acid protease.

**10.** The method as claimed in claim 8 or 9, **characterized in that** the chymosin is provided at the end of the lag phase of the lactic acid fermentation.

**11.** The use of an enzyme chosen from the group of kappa caseinolytic enzymes which have the property of coagulating milk, for the manufacture, by heat treatment at least equivalent to pasteurization, by lactic acid fermentation and by kappa caseinolysis, of a stirred dairy product chosen from the group consisting of fermented milks and yogurts, said kappa caseinolysis being initiated between the collection of the milk and the end of the lactic acid fermentation, provided that if it is initiated before said heat treatment, care is then taken not to induce precipitation during this heat treatment.

**12.** A stirred dairy product chosen from the group consisting of fermented milks and yogurts which is obtainable from a milk pasteurized at a temperature of between 92 and 95°C for 5 to 10 mm, **characterized in that** its kappa caseinolysis level is greater than or equal to 20% relative to the skimmed and prepasteurized bulk-blended milk.

**13.** A stirred dairy product chosen from the group consisting of fermented milks and yogurts, which is obtainable by the method as claimed in any one of claims 1 to 10.

**FIGURE 1**

**FIGURE 2**